# EUROPÄISCHE PATENTSCHRIFT

(11) **EP 0 441 287 B1**
(45) Veröffentlichungstag und Bekanntmachung des Hinweises auf die Patenterteilung: **30.11.1994**
(21) Anmeldenummer: 91101446.2
(22) Anmeldetag: 04.02.1991
(51) Int. Cl.: B60R 13/06, B60J 10/00

(54) **Metallband als Einlage für Zier- und Dichtstreife**
Metallic insert band for trimming and sealing strips
Lame métallique d'insertion pour bandes d'enjolivement et d'étanchéité

(30) Priorität: 07.02.1990 DE 4003622
(43) Veröffentlichungstag der Anmeldung: 14.08.1991
(73) Patentinhaber: BFC Büro- und Fahrzeugtechnik GmbH, D-71638 Ludwigsburg (DE)
(72) Erfinder: Neth, Walter, W-7000 Stuttgart 31 (DE)
(74) Vertreter: MANITZ, FINSTERWALD & PARTNER

(56) Entgegenhaltungen:
- DE-A- 3 331 901
- DE-A- 3 628 448
- GB-A- 1 553 370
- US-A- 3 699 718

## Beschreibung

Die Erfindung geht aus von einem Metallband nach der Gattung des Hauptanspruchs. Derartige Metallbänder werden insbesondere im Kfz-Bereich als Einlage für Dichtstreifen zum Abdichten von Motorraum-, Kofferraum- und Türöffnungen eingesetzt. Die kontinuierliche gefertigten Metallbänder sind mit Gummi und/oder flexiblem Kunststoff ummantelt und weisen Schlitze auf, unter anderem, um bei nicht haftmittelbeschichteten Metallbändern ein Durchdringen des Dichtmaterials zu ermöglichen, da die Haftung Gummi-Metall bzw. Kunststoff-Metall schlecht ist. Andererseits sind haftmittelbeschichtete Metallbänder sehr teuer. Die Metallbänder vor oder nach dem Ummanteln mit dem Dichtmaterial zu einem U-förmigen Klemmprofil gebogen, welches auf die Dichtflansche der Öffnung geklemmt wird. Um dabei den Konturen der Öffnung folgen zu können, muß das Klemmprofil meist sowohl in horizontaler als auch in vertikaler Ebene flexibel sein. Zudem soll das Klemmprofil in longitudinaler Richtung stauchbar sein, da die abzudichtenden Öffnungen erhebliche Umfangstoleranzen aufweisen können und ein Ablängen des Dichtstreifens vor Ort äußerst aufwendig wäre. Dichtstreifen mit stauchbaren Klemmprofil können nämlich auf die maximal vorkommende Länge bevorzugt endlos gefertigt und beim Einbau auf die tatsächliche Länge gestaucht werden. Ein Zusammenkleben, - vulkanisieren oder dergleichen dieser Dichtstreifen muß nicht vor Ort geschehen, so daß der Dichtstreifeneinbau auch von Robotern durchgeführt werden kann.

Andererseits muß das Klemmprofil auch eine gewisse Zugfestigkeit aufweisen, da das Metallband beim Beschichten mit dem Dichtmaterial durch einen sogenannten Extruder läuft, wobei erhebliche Kräfte in Längsrichtung des Bandes auftreten. Ein weiteres Erfordernis des Klemmprofiles besteht darin, eine größtmögliche Klemmkraft auf die Dichtflansche auszuüben.

Ein solches Metallband ist aus der DE-OS 36 28 448 für einen kanalförmigen Dichtstreifen bekannt. Es ist mit einer Vielzahl von periodisch zur Längsachse des Metallbandes angeordneten keilförmigen Schlitzen versehen, welche abwechseln vom einem und vom anderen Rand des Metallbandes nach innen geführt sind. Dieser Dichtstreifen ist nicht nur in durch die Längsachse des Metallbandes gehender vertikaler Ebene flexibel, sondern auch aufgrund der Keilform der Schlitze in Längsrichtung des Metallbandes stauchbar, im Gegensatz zu Metallbändern mit im wesentlichen rechteckigen, quer zur Längsrichtung des Metallbandes vorgesehenen Ausnehmungen, wie beispielsweise bei dem aus der DE 33 31 901 A 1 bekannten Metallband.

Er hat jedoch den Nachteil, daß beim Ablängen während des kontinuierlichen Herstellungsprozesses aufgrund der großen Schnittbreite und der Kürze der zur Verfügung stehenden Schnittzeit sehr hohe Wärmeenergie eingetragen werden muß. Dieser hohe Energieeintrag führt dazu, daß die das Metallband umgebenden Materialien wie Gummi, PVC und sonstigen Dichtmassen beeinträchtigt werden und das Metallband zu stark freigelegt wird, er muß daher durch aufwendige Kühlung möglichst verhindert werden. Neben der optischen Abwertung des Produktes wird dadurch zum einen die Verletzungsgefahr erhöht und zum anderen das Zusammenvulkanisieren der beiden Enden des Dichtstreifens erschwert. Bei nicht oder schlecht vulkanisierten Dichtstreifen besteht die Gefahr, daß das Metallband korrodiert.

Die Schwierigkeit beim Ablängen der Dichtstreifen ist durch den Herstellungsprozess bedingt. Um das Metallband mit dem Dichtmaterial zu ummanteln, wird das Metallband kontinuierlich einen sogenannten Extruder zugeführt, in welchem sich das Dichtmaterial unter Druckeinwirkung um das Metallband legt, welches anschließend aus dem Extruder durch eine Öffnung herausgedrückt wird, deren Form entsprechend dem gewünschten Profil des Dichtstreifens gewählt ist. Beim Extrusionsprozeß werden oft gleichzeitig mehrere verschiedene Materialien auf das Metallband gebracht, die oft ganz unterschiedliche Eigenschaft aufweisen, beispielsweise Gummis oder Kunststoffe mit verschiedenen Dichten, Farben, Härten, sowie dauerklebrige Dichtmassen und Flocken. Dieser Extrusionsprozeß läuft kontinuierlich ab. Am Auslauf der Extrusionlinie muß das fertige Dichtband maßgenau abgelängt werden durch das Trennverfahren wie Sägen, Schleifen, mechanisches Schneiden, Laser- oder Plasmaschneiden.

Die Schwierigkeit besteht darin, daß ein relativ schnellaufendes, kontinuierliches Klemmprofil in einem diskontinuierlichen Arbeitsgang abgelängt werden muß. Daraus ergibt sich die Kürze der zur Verfügung stehenden Zeitspanne. Zudem müssen gleichzeitig Materialien mit verschiedenen Eigenschaften durchgetrennt werden, so daß insgesamt ein sehr hoher Energieeintrag erforderlich ist.

Das erfindungsgemäße Metallband mit den kennzeichnenden Merkmalen des Hauptanspruchs hat demgegenüber den Vorteil, daß beim sogenannten Online-Schneiden, also beim Trennen des fertig beschichteten Dichtstreifens während des Extrusionsprozess kontinuierlich weiterläuft, der notwendige Energieeintrag gegenüber bekannten Metallbändern verringert ist. Durch die bei jedem keilförmigen Schlitz vorhandenen, quer zur Längsrichtung des Metallbandes verlaufenden durchtrennten Bereiche verbleibt jeweils ein im Verhältnis zur Breite des Metallbandes nur kurzer, nicht durchtrennter Bereich. Daher muß nur wenig Metall durchtrennt werden. Ein weiterer Vorteil dieser Schlitzanordnung liegt darin, daß sich keine unfallträchtigen, spitzen Endabschnitte beim Schneiden des Dichtstreifens ergeben, sondern auf beiden Seiten eine gerade Schnittlinie entsteht.

Aus der DE-OS 33 31 901 ist zwar ein Dichtstreifen bekannt, , dessen Metallband mit paarweise angeordneten, quer zur Langsrichtung verlaufenden, von außen nach innen geführten Schlitzen versehen ist. Bei diesen Schlitzen handelt es sich jedoch nicht um keilförmige Schlitze, sondern um gestanzte Ausnehmungen, zwischen denen ein in Längsrichtung des Metallbandes eines gewisse Länge aufweisender Steg verbleibt, so daß dieses Metallband nicht in Längsrichtung stauchbar ist und es beim Schneiden des Bandes nicht möglich ist, eine beidseitig durchgängige gerade Schnittlinie zu erzielen. Wie bereits oben erwähnt führt dies zur erhöhter Verletzungsgefahr und zu Problemen beim Zusammenfügen der beiden Enden eines Dichtstreifens. Bei diesem Metallband ist zudem das Verhältnis von Ausnehmungen zu verbleibendem Metallband größer 1, so daß zur Erhöhung der Zugfestigkeit des Metallbandes Fäden eingewoben werden müssen. Ebenso ist dadurch der Anteil an Abfallmaterial sehr hoch. Das Einweben von Fäden führt zu zusätzlichen Problemen beim Aneinanderschweißen zweier Bandenden. Ein weiterer Nachteil liegt darin, daß die Flexibilität des Dichtstreifens durch die Fäden eingeschränkt ist. Beim Biegen um eine Krümmung können die innen liegenden Ausnehmungen zwar verkleinert werden, die außenliegenden Ausnehmungen können sich aber aufgrund des eingewobenen Fadens nicht weiten.

Wie sich herausgestellt hat, weist das erfindungsgemäße Metallband eine für den Extrusionsprozess ausreichend hohe Zugfestigkeit auf, bei gleichzeitig hoher Flexibilität des gefertigten Dichtstreifens in horizontaler und vertikaler Richtung und hoher Stauchbarkeit in longitudinaler Richtung. Das erfindungsgemäße Metallband ist daher besonders als Einlage für solche Dichtstreifen geeignet, deren Enden vor dem Einbau zusammenvulkanisiert werden. Diese Dichtstreifen werden nämlich auf das maximale zulässige Maß der abzudichtenden Öffnung abgelängt und der ringförmig zusammenvulkanisierte Dichtstreifen beim Einbauen soweit gestaucht, daß seine Länge mit dem Umfang der Öffnung übereinstimmt.

Nach einer Ausgestaltung der Erfindung sind die nicht durchtrennten Bereiche alternierend um die in Längsrichtung des Metallbandes verlaufende Mittelachse vorgesehen. Dadurch ergibt sich ein Dichtstreifen, dessen Flexibilität in horizontaler Ebene in beiden Biegungsrichtungen gleich groß ist.

Nach einer anderen Ausgestaltung der Erfindung sind die nicht durchtrennten Bereiche um eine Achse alternierend vorgesehen, die zu der in Längsrichtung des Metallbandes verlaufende Mittelachse parallel ist. Durch diese asymmetrische Ausgestaltung ergibt sich ein Dichtstreifen mit unterschiedlicher Flexibilität je nach Biegungsrichtung in horizontaler Ebene. Dadurch kann vorteilhafterweise ein fehlerhafter Einbau des Dichtstreifens verhindert werden. Der Arbeiter, der den Dichtstreifen einbaut, erkennt anhand der Flexibilität die richtige Biegerichtung beim Einbau.

Nach einer weiteren Ausgestaltung der Erfindung sind die durchtrennten Bereiche nicht aufgeweitet, während die keilförmigen Schlitze eine maximale Öffnung im Millimeterbereich aufweisen. Wie bereits oben erwähnt, sind die Schlitze im Metallband nicht nur wegen der gewünschten Flexibilität und Stauchbarkeit des Dichtstreifens erforderlich, sondern auch um das flexible Dichtmaterial mit Metall keine fest Verbindung eingeht, sofern dieses nicht besonders vorbehandelt wurde. Die Schlitze müssen eine bestimmte Mindestöffnung aufweisen, damit einerseits das Dichtmaterial das Metallband an den Schlitzen durchdringen kann, um eine feste Verankerung zu erreichen und andererseits, um die gewünschte Stauchbarkeit des fertigen Dichtprofils zu erreichen. Es reicht dabei jedoch völlig aus, wenn die keilförmigen Schlitzen diese erforderliche Mindestöffnung aufweisen. Die durchtrennten Bereiche können unaufgeweitet bleiben, wodurch sich vorteilhafterweise eine erhöhte Klemmkraft des Dichtstreifens ergibt. Der Vorteil beim Online-Schneiden bleibt dabei erhalten. Diese gewünschte Öffnung der keilförmigen Schlitze wird dadurch erreicht, daß das Metallband entweder gestanzt wird mit entsprechender Stanzbreite oder aber auch durch Schneiden, wobei die dabei erzeugten geschlossenen Schlitze durch Walzen oder Ziehen geöffnet werden. Dabei wird das Band in Längsrichtung gestreckt, wodurch sich ein Längengewinn beim fertigen Bank ergibt.

Weitere Vorteile und vorteilhafte Ausgestaltungen der Erfindung sind der nachfolgenden Beschreibung, der Zeichnung und den Ansprüchen entnehmbar.

Ein Ausführungsbeispiel des Gegenstandes der Erfindung ist in der Zeichnung dargestellt und wird im folgenden näher beschrieben.

Es zeigen
- Fig. 1: ein Ausführungsbeispiel eines Metallbandes mit geschnittenen, aber noch geschlossenen Schlitzen,
- Fig. 2: dasselbe Metallband nach dem Öffnen der langen Schlitze durch Strecken des Bandes,
- Fig. 3: ein aus diesem Metallband geformtes U-förmiges Klemmprofil.
- Fig. 4: ein anderes Ausführungsbeispiel eines Metallbandes mit geschnittenen, noch geschlossenen Schlitzen und
- Fig. 5: das Ausführungsbeispiel von Fig. 1, bei dem alle Schlitze durch Strecken des Metallbandes geöffnet wurden.

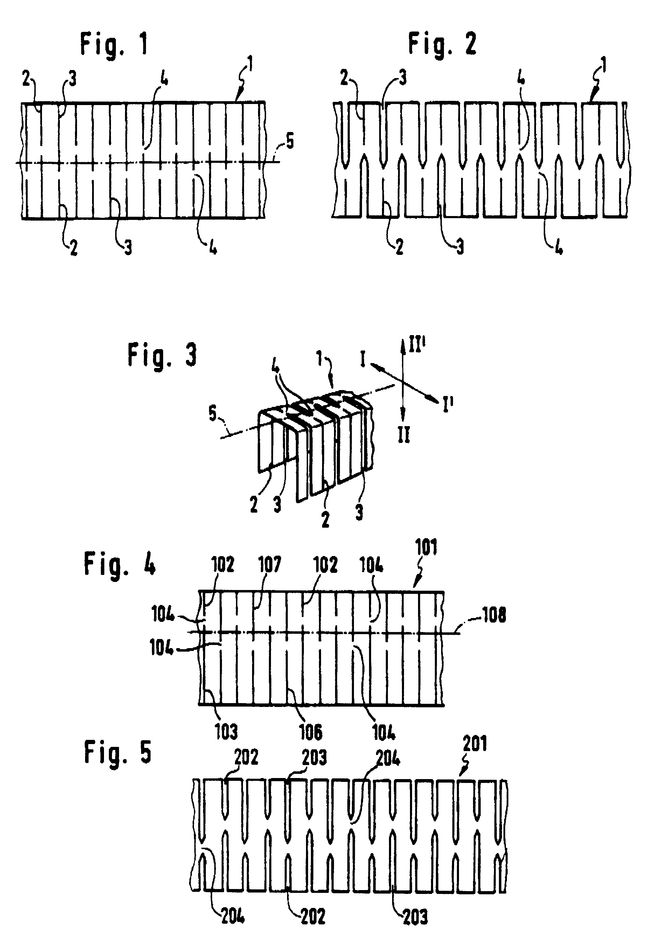

Das in Fig. 1 dargestellte, endlos gefertigte Metallband 1 weist zwei Arten von Schlitzen 2 bzw. 3 auf, die quer zur Längsachse des Metallbandes 1 periodisch angeordnet sind. Bei der ersten Art handelt es sich um kurze Schlitze 2 und bei der zweiten Art um lange Schlitze 3, wobei beide Schlitze 2, 3 vom Rand des Metallbandes 1 aus nach innen geführt und paarweise angeordnet sind. Zwischen jedem Schlitzpaar 2, 3 verbleibt ein im Vergleich zur Breite des Metallbandes 1 kurzer Steg 4. In Längsrichtung des Metallbandes 1 folgt jeweils ein kurzer Schlitz 2 auf einen langen Schlitz 3 und umgekehrt, so daß die Stege 4 alternierend um die Mittelachse 5 angeordnet sind.

Bei der in Fig. 2 dargestellten gestreckten Form des Metallbandes 1 sind alle Schlitze 3 geöffnet, wobei die maximale Öffnungsweite im Millimeterbereich liegt, während alle Schlitze 2 ganz oder nahezu geschlossen sind.

Fig. 3 zeigt das zu einem U-Profil gebogene Metallband 1 aus Fig. 2 mit Schlitzen 2 und 3. Wie Fig. 3 entnehmbar ist, befinden sich die zwischen den Schlitzen 2, 3 eines Schlitzpaares verbleibenden Stege 4 im Basisabschnitt des U-Profils, so daß neben der guten longitudinalen Stauchbarkeit hohe Flexibilität in vertikaler Richtung - Pfeile II, II' - gegeben ist. Dieses Metallband weist wegen der geschlossenen kurzen Schlitze 2 eine besonders hohe Klemmkraft auf und ist wegen der symmetrischen Anordnung der Stege 4 in beiden horizontalen Richtungen, Pfeile I und I', gleichermaßen flexibel.

Das in Fig. 4 dargestellte Metallband 101 weist zwei Arten von Schlitzpaaren auf, nämlich Paare aus ganz kurzen Schlitzen 102 und ganz langen Schlitzen 103 sowie Paare aus mittelkurzen Schlitzen 106 und mittellangen Schlitzen 107. Diese Paare sind in Längsrichtung des Metallbandes 101 abwechselnd angeordnet, wodurch die zwischen den Schlitzen eines Paares verbleibenden Stege 104 alternierend zu einer zur Mittelachse des Metallbandes 101 parallelen Achse 108 angeordnet sind. Dieses Metallband ergibt ein U-förmiges Klemmprofil mit unterschiedlicher Flexibilität in den beiden horizontalen Richtungen I und I'.

Bei dem in Fig. 5 gezeigten Metallband 201 sind alle Schlitze 202 und 203 geöffnet, d. h., die sich gegenüberliegenden Ränder eines Schlitzes weisen einen maximalen Abstand im Millimeterbereich auf, bevorzugt zwischen 0 und 2 mm. Dieses Metallband 201 ergibt ein U-Profil geringerer Klemmkraft als das mit geschlossenen kurzen Schlitzen 2. dafür ist die Haftung des Dichtmaterials auch bei nicht haftmittelbeschichteten Bändern auf dem Metallband besonders groß. Diese Schlitzform kann auch durch Stanzen mit entsprechender Stanzbreite erzielt werden.

Alle dargestellten Metallbänder 1, 101, 201 zeichnen sich durch hohe Flexibilität in horizontaler Richtung, Pfeile I, I' und in vertikaler Richtung, Pfeile II, II', aus und sind in Längsrichtung gut stauchbar bei gleichzeitig ausreichender Zugfestigkeit. Sie weisen hohe Klemmkräfte auf und insbesondere bei kleinen Schlitzbreiten sind die Oberflächen des fertigen Dichtprofils sehr gleichmäßig, d. h. ohne oder nur mit geringfügigen Rattermarken (hungry-horse Effekt) behaftet.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1, 101, 201: Metallband
- 2, 102, 202: kurzer Schlitz
- 3, 103, 203: langer Schlitz
- 4, 104, 204: Steg
- 5: Mittelachse
- 106: mittelkurzer Schlitz
- 107: mittellanger Schlitz
- 108: Längsachse
- I, I': horizontaler Richtungspfeil
- II, II': vertikaler Richtungspfeil

## Patentansprüche

1. In Längsrichtung stauchbares Metallband (1) als Einlage für Zier- und Dichtstreifen aus flexiblem Material in welchem es zu einem U-förmigen Klemmprofil umgebogen ist, mit einer Vielzahl von periodisch quer zur Längsache (5) des Metallbandes angeordneten, abwechselnd vom einen und vom anderen Rand des Metallbandes aus nach innen geführten, keilförmigen oder innen keilförmig auslaufenden Schlitzen (3), dadurch gekennzeichnet, daß das Metallband (1) bei jedem Schlitz (3) quer zu seiner Längsachse (5) von dem, dem Schlitz gegenüberliegenden Rand bis kurz vor die Spitze des Schlitzes (3) durchtrennt ist, sodaß zwischen der Spitze eines jeden Schlitzes (3) und dem durchtrennten Bereich (2) lediglich ein im Verhältnis zur Breite des Metallbandes (1) nur kurzer, nicht durchtrennter Bereich (4) verbleibt.

2. Metallband nach Anspruch 1, dadurch gekennzeichnet, daß die durchtrennten Bereiche (2) nicht aufgeweitet sind.

3. Metallband nach Anspruch (1) dadurch gekennzeichnet, daß die durchtrennten Bereiche aufgeweitet sind.

4. Metallband nach einem der Ansprüche 1 bis 3, dadurch gekennzeichnet, daß die nichtdurchtrennten Bereiche (4) alternierend um die in der Mitte des Metallbandes (1) verlaufende Längsachse (5) vorgesehen sind.

5. Metallband nach einem der Ansprüche 1 bis 3, dadurch gekennzeichnet, daß die nicht durchtrennten Bereiche (104) um eine zu der in der Mitte des Metallbandes (101) verlaufenden Längsachse parallele Achse (108) alternierend vorgesehen sind.

## Claims

1. Metal strip (1), compressible in the longitudinal direction as an insert for decorative and sealing strips, made of flexible material, in which it is bent into a rectangular U-shape, with a large number of slits (3) arranged alternately from either side at fixed intervals cross-ways to the longitudinal axis (5) of the metal strip and running away inwards in a wedge shape or with a wedge-shaped tip, characterised by the metal strip (1) being cut through opposite each slit cross-ways to its longitudinal axis (5) from the edge to a point just short of the tip of the slit (3), so that only a short area, in relation to the width of the metal strip (1), remains uncut between the tip of each slit (3) and the cut-through part (2).

2. Metal strip along the lines of Claim 1, characterised by the cut-through part (2) not being widened.

3. Metal strip along the lines of Claim 1, characterised by the cut-through part (2) being widened.

4. Metal strip along the lines of one of the Claims 1 to 3, characterised by the part (4) that is not cut through being provided alternately either side of the longitudinal axis (5) of the metal strip (1 ).

5. Metal strip along the lines of one of the Claims 1 to 3, characterised by the areas (104) that are not cut through being provided alternately on either side of an axis (108) running parallel to the middle of the metal strip (101).

## Revendications

1. Ruban métallique (1) comprimable dans le sens de la longueur servant de support à des rubans d'ornement et à des bandes d'étanchéité en matière flexible, recourbé pour former un profilé en U et muni d'une multitude de fentes (3) cunéiformes ou se terminant à l'intérieur en prenant un profil cunéiforme, disposées périodiquement transversalement à l'axe longitudinal (5) du ruban métallique et dirigées vers l'intérieur en alternance d'un bord du ruban métallique à l'autre, ruban métallique (1) caractérisé par le fait qu'à chaque fente (3), il est sectionné transversalement à son axe longitudinal (5) depuis le bord opposé à la fente jusqu'à peu avant la pointe de la fente (3) si bien qu'il ne reste entre la pointe de chacune des fentes (3) et la zone sectionnée (2) qu'une zone non sectionnée (4) courte par rapport à la largeur du ruban métallique (1).

2. Ruban métallique conforme à la revendication 1, caractérisé par le fait que les zones sectionnées (2) ne sont pas élargies.

3. Ruban métallique conforme à la revendication (1), caractérisé par le fait que les zones sectionnées sont élargies.

4. Ruban métallique conforme à l'une des revendications 1 à 3, caractérisé par le fait que les zones non sectionnées (4) sont prévues pour venir s'établir en alternance autour de l'axe longitudinal (5) au centre du ruban métallique (1).

5. Ruban métallique conforme à l'une des revendications 1 à 3, caractérisé par le fait que les zones non sectionnées (104) sont prévues pour venir s'établir en alternance autour d'un axe (108) parallèle à l'axe longitudinal au centre du ruban métallique (101).
